# EUROPÄISCHE PATENTANMELDUNG

(11) **EP 1 755 187 A2**
(43) Veröffentlichungstag der Anmeldung: **21.02.2007**
(21) Anmeldenummer: 06016323.5
(22) Anmeldetag: 04.08.2006
(51) Int. Cl.: H01M 8/02

(54) **Bipolarplatte oder Elektrodenplatte für Brennstoffzellen oder Elektrolyseur-Stapel sowie ein Verfahren zur Herstellung einer Bipolarplatte oder Elektrodenplatte für Brennstoffzellen oder Elektrolyseur-Stapel**

(30) Priorität: 04.08.2005 DE 102005037345
(71) Anmelder: Hüttenberger Produktionstechnik Martin GmbH, 35428 Langgöns (DE)
(72) Erfinder: Martin, Michael Dipl.-Ing., D-35606 Solms-Oberbiel (DE)
(74) Vertreter: Knefel, Cordula

(57) **Zusammenfassung**

Bipolarplatte oder Elektrodenplatte für Brennstoffzellen oder Elektrolyseur-Stapel, die aus einem leitenden Material gebildet ist, und bei der das leitende Material wenigstens teilweise mit einem nicht leitenden Material umspritzt ausgebildet ist, oder die aus Einzelteilen aus leitendem und nicht leitendem Material zusammengesetzt ist, wobei durch das nicht leitende Material Kanäle für Reaktionsmittel ausgebildet sind, wobei eine in Segmente geteilte Anode und eine in Segmente geteilte Kathode der Bipolarplatte oder Elektrodenplatte jeweils wenigstens eine Trennstelle in einer Leiterstruktur aufweist.

## Beschreibung

Die Erfindung betrifft eine Bipolarplatte oder Elektrodenplatte für Brennstoffzellen oder Elektrolyseur-Stapel sowie ein Verfahren zur Herstellung von Bipolarplatten oder Elektrodenplatten für Brennstoffzellen oder Elektrolyseur-Stapel.

Gemäß dem Stand der Technik werden Brennstoffzellen aus mehreren zusammengesetzten Bipolarplatten oder Elektrodenplatten gebildet. Der Einfachheit halber werden die nachfolgenden Ausführungen in Bezug auf Bipolarplatten erfolgen. Es sind jedoch gleichermaßen Elektrodenplatten gemeint.

Da jede Bipolarplatte lediglich eine Spannung von circa 0,5 Volt erreichen kann, ist es gemäß dem Stand der Technik erforderlich, zur Erreichung einer bestimmten Spannung und einer bestimmten Leistung, die durch das Einsatzgebiet der Brennstoffzelle bestimmt wird, eine entsprechende Anzahl von Bipolarplatten vorzusehen, um die erforderliche Leistung der Brennstoffzelle zu erzielen. Da die Spannung in den meisten Fällen nicht ausreicht, muss in diesem Fall eine elektronische Steuerung vorgesehen werden, um die erforderliche Spannung zu erzeugen.

Diese elektronische Steuerung ist in den meisten Fällen sehr aufwändig und kostspielig.

Das der Erfindung zugrunde liegende technische Problem besteht darin, eine Brennstoffzelle mit Bipolarplatten oder Elektrodenplatten anzugeben, mit der ohne oder mit geringem Aufwand für eine zusätzliche elektronische Steuerung eine geforderte Leistung und gleichzeitig eine geforderte Spannung erzielt werden kann. Darüber hinaus soll ein Verfahren zur Herstellung derartiger Bipolarplatten oder Elektrodenplatten angegeben werden.

Das der Erfindung zugrunde liegende technische Problem wird durch eine Bipolarplatte oder Elektrodenplatte mit den Merkmalen gemäß Anspruch 1 gelöst sowie durch ein Verfahren mit den Merkmalen gemäß Anspruch 13.

Die erfindungsgemäße Bipolarplatte oder Elektrodenplatte für Brennstoffzellen oder Elektrolyseur-Stapel, die aus einem leitenden Material gebildet ist, und bei der das leitende Material wenigstens teilweise mit einem nicht leitenden Material umspritzt ausgebildet ist, oder die aus Einzelteilen aus leitendem und nicht leitendem Material zusammengesetzt ist, wobei durch das nicht leitende Material Kanäle für Reaktionsmittel ausgebildet sind, zeichnet sich dadurch aus, dass eine in Segmente geteilte Anode und eine in Segmente geteilte Kathode der Bipolarplatte oder Elektrodenplatte jeweils wenigstens eine Trennstelle in einer Leiterstruktur aufweist.

Die Bipolarplatte oder Elektrodenplatte wird, wie aus dem Stand der Technik (EP 1 517 388 A1) bekannt, derart ausgebildet, dass zur Herstellung der in Segmente geteilten Bipolarplatten oder Elektrodenplatten die Bipolarplatte oder Elektrodenplatte wenigstens ein Stanzband und/oder wenigstens eine Platine aufweist, die aus einem flächigen Material eines leitfähigen und korrosionsgeschützten Metalles gestanzt wird oder eine entsprechende Oberfläche erhält, und dass die Kontaktflächen zu den in Segmente geteilten Anoden beziehungsweise in Segmente geteilten Kathoden wechselweise nach beiden Seiten aus der ursprünglichen Ebene verschoben werden, und dass in einem weiteren Verfahrensschritt das wenigstens eine Stanzband und/oder die wenigstens eine Platine wenigstens teilweise mit Kunststoff umspritzt oder aus Einzelteilen gefügt wird, derart, dass mit dem Kunststoff zwischen den gestanzten Leiterbahnen Kanäle für die Durchführung von Reaktionsmitteln ausgebildet werden.

Vorteilhaft wird die derart ausgebildete Bipolarplatte oder Elektrodenplatte aufgeteilt, indem wenigstens ein Metallstreifen der Anode und wenigstens ein Metallstreifen der Kathode miteinander elektrisch verbunden sind, und indem wenigstens ein weiterer Streifen der Anode und wenigstens ein weiterer Streifen der Kathode ebenfalls miteinander elektrisch verbunden sind, jedoch getrennt von dem wenigstens ersten Streifen der Anode und dem wenigstens ersten Streifen der Kathode. Hierdurch ist es möglich, eine Bipolarplatte oder Elektrodenplatte mit einer höheren Ausgangsspannung zu erzeugen.

Auf diese Art und Weise lässt sich in der in Segmente geteilten Anode und in der in Segmente geteilten Kathode der Bipolarplatte oder Elektrodenplatte wenigstens eine Trennstelle erzielen mit einer Verschaltung.

Vorteilhaft teilen die Trennstellen die Leiterstrukturen in zwei Ebenen auf, die jeweils durch Metallstreifen gebildet sind.

Gemäß einer besonders bevorzugten Ausführungsform der Erfindung sind die Ebenen der Metallstreifen der Anode und der Metallstreifen der Kathode überkreuzend verschaltet.

Durch die variablen Trennstellen können auf einem Flow-Field durch Reihen- und Parallelschaltung die Spannung und die Stromstärke variabel gewählt werden.

Es ist möglich, die in Segmente geteilte Bipolarplatte oder Elektrodenplatte in der Brennstoffzelle als plane Bipolarplatte oder plane Elektrodenplatte oder als gefaltete Bipolarplatte oder Elektrodenplatte anzuordnen.

Das Stanz- und Spritzwerkzeug weist vorteilhaft einen modularen Aufbau auf, so dass Bipolarplatten oder Elektrodenplatten mit der geforderten Anzahl von Trennstellen durch den Austausch und Einsatz entsprechender Einsätze im Stanz- und Spritzwerkzeug mit ein und demselben Stanz- und Spritzwerkzeug herstellbar sind.

Hierdurch ist es möglich, dass eine in Segmente geteilte Bipolarplatte (Zelle) in mehrere Bipolarplatten aufgeteilt wird mit der erforderlichen Verschaltung, wobei der Prozessschritt Stanzen und Spritzen in einem kombinierten Werkzeug erfolgt oder durch Montage gefügt wird. Gleiches gilt für die Elektrodenplatten.

Üblicherweise kann bei einer Bipolarplatte (Zelle) nur eine Spannung von beispielsweise 0,5 Volt erreicht werden. Bei einer Verschaltung von je vier Zellen auf einer Bipolarplattenhälfte ist damit eine Spannung von circa zwei Volt und bei einer Verschaltung von je acht Zellen auf einer Bipolarplattenhälfte eine Spannung von circa vier Volt erreichbar, ohne dass ein Spannungswandler notwendig wäre.

Es ist notwendig, dass die Gasdiffusionsschicht (GDL), die zwischen den Bipolarplatten angeordnet wird, ebenfalls entsprechend in Segmente geteilt wird.

Die wenigstens eine Membran ist als ungeteilte Membran ausgebildet.

Auf der einen Hälfte der Bipolarplatte wird im Flow-Field Wasserstoff (H₂) verteilt und auf der zweiten Hälfte der Bipolarplatte wird Luft oder Sauerstoff verteilt.

In der nächsten Ebene bei einem Bipolarplattenstapel (Stack) liegt über der Hälfte vom Wasserstoff-Flow-Field ein Luft-Flow-Field und auf der zweiten Hälfte liegt über dem Luft-Flow-Field ein Wasserstoff-Flow-Field. Dazwischen liegt jeweils eine Membran mit in Segmente geteilten Gasdiffusionsschichten (GDL).

Der Bipolarplatten-Stack hat vorteilhaft die Anschlüsse an der ersten und an der letzten Zelle und der Teilung entsprechend mehrere Anschlüsse.

Diese Anschlüsse können parallel und/oder in Reihe verschaltet werden, zum Beispiel mit einem Wahlschalter oder Steckkontakten.

Dadurch wird die Brennstoffzelle ohne Elektronik auf mehrere Spannungen einfach umgeschaltet, und es ist kein Spannungswandler notwendig.

Bezüglich der Einzelheiten der Herstellung der Bipolarplatten wird auf die EP 1 517 388 A1 hingewiesen.

Unter flächigem Material werden gemäß der Erfindung Platinen, Streifen oder Bandmaterial verstanden. Der Einfachheit halber werden die nachfolgenden Ausführungen in Bezug auf Bandmaterial erfolgen. Es ist jedoch gleichermaßen die Ausführung von Platinen und Streifen gemeint.

In einem Verfahrensschritt zur Herstellung der in Segmente geteilten Bipolarplatte oder Elektrodenplatte wird das wenigstens eine Stanzband und/oder die wenigstens eine Platine wenigstens teilweise mit Kunststoff umspritzt. Die Kunststoffumspritzung erfolgt derart, dass mit dem Kunststoff zwischen den gestanzten Leiterbahnen Kanäle für die Durchführung von Reaktionsmitteln ausgebildet werden.

Die Metallstreifen werden lediglich teilweise umspritzt, derart, dass die Metallstreifen bei der Montage der in Segmente geteilten Bipolarplatte oder Elektrodenplatte in unmittelbarem Kontakt zu einer Gasdiffusionsschicht einer Membran mit in Segmente geteilten Gasdiffusionsschichten (GDL) sind.

Gemäß der Erfindung ist die Bipolarplatte oder Elektrodenplatte in Segmente geteilt, das heißt, die Anode und/oder die Kathode sind in Segmente geteilt.

Das Bandmaterial wird in einem ersten Verfahrensschritt vorteilhaft streifenförmig eingeschnitten. Anschließend werden die Streifen aus einer Mittellage herausgeschoben, und anschließend wird der Spritzvorgang durchgeführt. Bei diesem Stanzvorgang werden gleichzeitig die Trennstellen, das heißt die Stanzlinien für die Teilung der Platte ausgebildet.

Während des Spritzvorganges werden die Streifen in ihre Endposition verschoben und dort teilweise umspritzt, so dass sie in dem Kunststoff, der gleichzeitig die Kanäle für die Reaktionsmittel ausbildet, eine feste Position erhalten.

Aus diesen Bipolarplatten lässt sich in einfacher Art und Weise ein Stapel herstellen, indem zur Stapelbildung die miteinander verbundenen Platten durch jeweils 180°-Biegungen aufeinander gestapelt werden. Zwischen den Platten wird eine wenigstens eine Gasdiffusionsschicht tragende Membran angeordnet. Es ist auch möglich, die Platten ohne Biegungen, das heißt in der planen Form, wie sie hergestellt sind, aufeinander zu stapeln.

Der Verlauf der Kanäle in einem Flow-Field wird vorteilhaft zwischen den gegenüberliegenden Plattenebenen parallel angeordnet, so dass jeweils zwei sich gegenüberliegende, aus dem Bandmaterial gebildete und mit Kunststoff teilweise umspritzte Stanzbahnen oder Platinen mit Druck auf beiden Seiten der die Gasdiffusionsschicht tragenden Membran anliegend angeordnet werden.

Vorteilhaft wird ein Stapel durch Aneinanderreihen gleicher Abschnitte aufgebaut, wobei ein Abschnitt einer Bipolarplatte Verteilerkanäle sowie Anschlüsse für die Reaktionsmittel und eine Membran-Elektroden-Einheit (MEA) aufweist. Die Membran-Elektroden-Einheit eines ersten Abschnittes bildet die gasdichte und elektrisch isolierende, jedoch protonenleitfähige Begrenzung des zweiten Abschnittes. Die Membran-Elektroden-Einheit des zweiten Abschnittes bildet die gasdichte und elektrisch isolierende, jedoch protonenleitfähige Begrenzung des dritten Abschnittes und so weiter.

Vorteilhaft sind an beiden Enden des Stapels Endplatten angeordnet, zwischen denen die einzelnen aneinander gereihten Abschnitte mit ihren Dichtungen eingespannt sind. Die Endplatten weisen vorteilhaft Anschlüsse für das Zu- und Abführen der Reaktionsmittel auf.

Besonders vorteilhaft ist die erfindungsgemäße Kombination des Metalles mit dem Kunststoff. Die Metallstreifen sind teilweise mit Kunststoff umspritzt, wobei durch den Kunststoff Kanäle für die Reaktionsmittel ausgebildet sind. Die Stanzbänder oder Platinen sind derart mit dem Kunststoff umspritzt, dass sie unmittelbar an einer Gasdiffusionsschicht der Membran anliegend angeordnet werden können. Die Ausbildung der Kunststoffkanäle ist vorteilhaft so gewählt, dass das Gas nicht unmittelbar mit den Metallplatten in Berührung kommt. Die Metallplatten liegen entweder an der Gasdiffusionsschicht an oder sind mit Kunststoff umspritzt. Dadurch, dass die Kanäle vollständig mit Kunststoff abgedichtet sind beziehungsweise zu der offenen Seite hin durch die Membran mit den Gasdiffusionsschichten begrenzt sind, kann kein Kurzschluss auftreten.

Gemäß einer vorteilhaften Ausführungsform der Erfindung sind die Metallstreifen einer Ebene der in Segmente geteilten Anode und die Metallstreifen einer Ebene der in Segmente geteilten Kathode jeweils an einem gemeinsamen Metallstreifen angeordnet, und die wenigstens eine Trennstelle trennt den gemeinsamen Metallstreifen elektrisch in mehrere Bereiche. Dies ist ein besonders einfach herzustellender Aufbau.

Die Metallstreifen sind vorteilhaft gegen die die Reaktionsmittel führenden Kunststoffkanäle isoliert ausgebildet.

Gemäß einer weiteren vorteilhaften Ausführungsform sind Anschlüsse, Verbindungen und Querschnitte für den Einsatz als Elektrolyseur ausgelegt. Hierdurch ist das Einsatzgebiet der erfindungsgemäßen Bipolar- oder Elektrodenplatte vielfältig.

Durch das Stanzen der Metallleiter ist es möglich, diese sehr schmal auszubilden (bis circa einen Millimeter), so dass sehr kleine und dennoch leistungsfähige Brennstoffzellen für kleine Geräte, beispielsweise für Laptops, Fotoapparate, Camcorder oder auch für stationäre Anwendungen, zum Beispiel Camping, Wohnmobile sowie Notstromaggregate (USV) hergestellt werden können.

Das erfindungsgemäße Herstellungsverfahren zeichnet sich durch folgende Vorteile aus:
1. Die Leiterbahnen werden aus einem Blech komplett und ohne Abfall gebildet, wobei gleichzeitig die Trennstellen ausgebildet werden,
2. die Leiterbahnen werden abwechselnd nach beiden Seiten der Platine oder des Stanzbandes verschoben und dort durch teilweises Umspritzen mit Kunststoff in ihrer Lage fixiert,
3. die Spritzwerkzeugeinsätze, welche kammförmig ausgebildet sind, bilden gleichzeitig die Hohlräume, die später die Kanäle für das Gas bilden,
4. die Metallleiter werden beim Spritzvorgang in die endgültige Position gedrückt.

Hierdurch ist es möglich, in einem relativ preiswerten Verfahren Bipolarplatten auszubilden.

Um eine Bipolarplatte oder Elektrodenplatte in Segmente aufteilen zu können, ist es notwendig, den Verlauf der Kanäle im Flow-Field zwischen den gegenüberliegenden Plattenebenen parallel anzuordnen und die beiden direkt gegenüberliegenden Metallkontaktstreifen von beiden Seiten auf die Membran-Elektroden-Einheit beziehungsweise Gasdiffusionsschicht drücken zu lassen.

Es sind auch mehr als vier Segmente bei der Aufteilung der Bipolarplatte oder Elektrodenplatte möglich. Es ist durchaus möglich, auch zwölf Segmente oder mehr vorzusehen.

Die erfindungsgemäße Art der Verschaltung lässt sich auch bei zum Stand der Technik gehörenden Bipolarplatten oder Elektrodenplatten, beispielsweise mit einer bekannten Graphit/Komposit-Lösung verwirklichen.

Gemäß einer weiteren vorteilhaften Ausführungsform werden die Streifen während des Stanzvorganges lediglich teilweise eingeschnitten und/oder es werden Verbindungsstege ausgebildet. Hierdurch vereinfacht sich das Herstellungsverfahren.

Vorteilhaft werden in einem Arbeitsbereich der gestanzten Platinen oder Stanzbänder Kanäle zur Führung der Reaktionsmittel vor- oder fertiggeformt. Hierdurch ist die Herstellung der erfindungsgemäßen Bipolar- oder Elektrodenplatte deutlich vereinfacht.

Anstelle von Wasserstoff kann beispielsweise auch Methanol oder andere geeignete Stoffe verwendet werden.

Weitere Merkmale und Vorteile der Erfindung ergeben sich anhand der zugehörigen Zeichnung, in der mehrere Ausführungsbeispiele nur beispielhaft dargestellt sind. In der Zeichnung zeigen:
- Fig. 1: einen Längsschnitt durch einen Stapel von Bipolarplatten (Stand der Technik);
- Fig. 2: eine 1-Volt-Zelle mit geraden Platten;
- Fig. 3: eine 2-Volt-Zelle mit geraden Platten;
- Fig. 4: eine 3-Volt-Zelle mit geraden Platten;
- Fig. 5: eine 4-Volt-Zelle mit geraden Platten;
- Fig. 6: eine 2-Volt-Zelle (Reihenschaltung mit geraden Platten) als Prinzipschaltbild;
- Fig. 7: eine 3-Volt-Zelle (Reihenschaltung mit geraden Platten) als Prinzipschaltung.

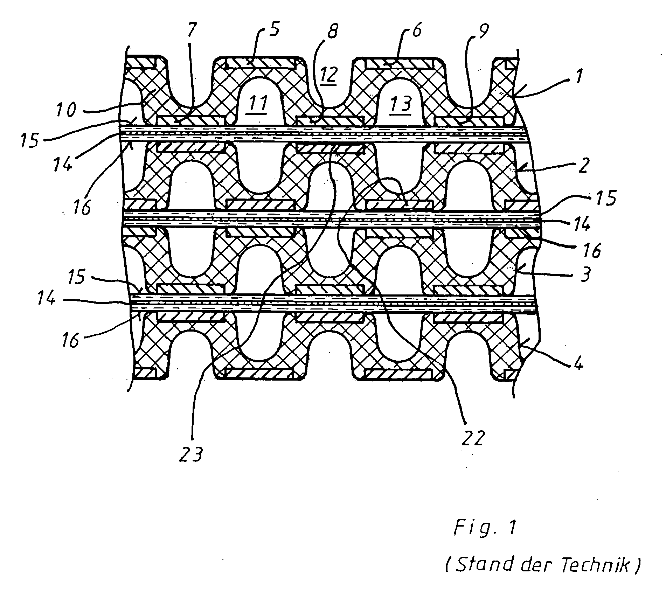

Die Fig. 1 zeigt zum Stand der Technik gehörende Bipolarplatten 1, 2, 3, 4. Die Elektrodenplatte 1 weist Metallstreifen 5 bis 9 auf, die ursprünglich aus einem Blech gestanzt worden sind. In dem Blech waren die Metallstreifen 7, 5, 8, 6, 9 nebeneinander liegend angeordnet. Mittels eines Kunststoffes 10 sind Kanäle 11, 12, 13 für das Reaktionsgas oder die Reaktionsflüssigkeit (hier nicht dargestellt) ausgebildet. Zwischen der Elektrodenplatte 1 und der Elektrodenplatte 2 ist eine Membran 14 mit Gasdiffusionsschichten 15, 16 angeordnet. Die Elektrodenplatten 1, 2 werden mit einem gewissen Kontaktdruck auf die Gasdiffusionsschichten 15, 16 gedrückt.

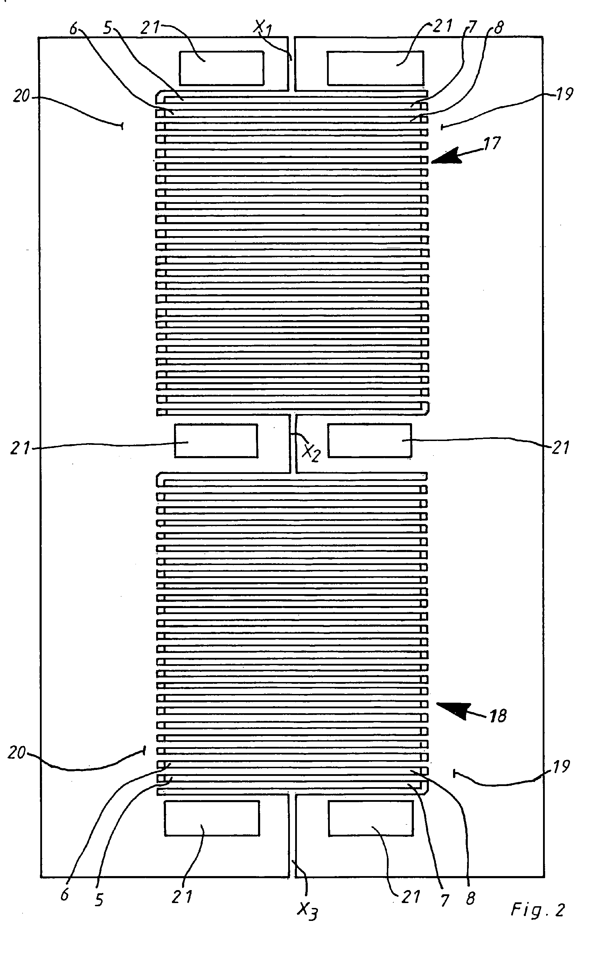

Fig. 2 zeigt den ersten Schritt bei der Aufteilung der Bipolarplatte. Dabei wird die Grundform durch die Trennung X1, X2, X3 in zwei Ebenen getrennt. Die Metallstreifen 5, 6 bilden dabei eine erste Ebene und die Metallstreifen 7, 8 eine zweite Ebene. Die beiden Ebenen werden, wie in Fig. 1 gezeigt, durch einen Kunststoff (10) gegeneinander isoliert.

Die in Fig. 2 dargestellten Metallstreifen 5, 6 der Anode 17 und Kathode 18 sind über einen gemeinsamen Metallstreifen 19 elektrisch miteinander verbunden. Die Metallstreifen 7, 8 der Anode 17 und Kathode 18 sind über einen gemeinsamen Metallstreifen 20 elektrisch verbunden.

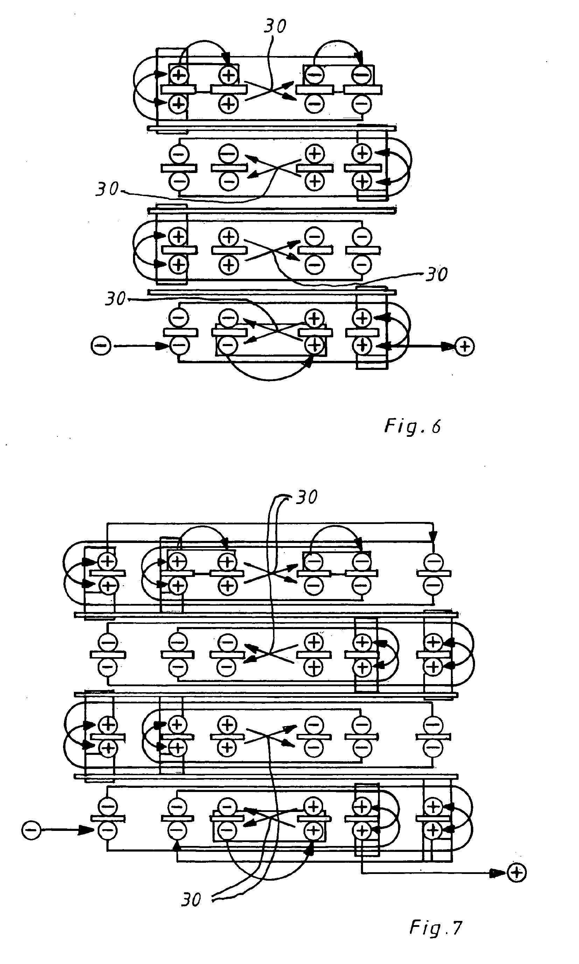

Um eine elektrische Reihenschaltung in einem Stapel der Bipolarplatten oder Elektrodenplatten realisieren zu können, ist es notwendig, die Metallstreifen 5, 6 der Anode in die obere Ebene und die Metallstreifen 5, 6 der Kathode in die untere Ebene zu verschieben. Die Metallstreifen 7, 8 werden entgegengesetzt angeordnet. Durch diese in Fig. 6 und Fig. 7 gezeigte überkreuzende Verschaltung 30 entstehen zwei voneinander unabhängige Bipolarplatten mit doppelter Spannung. Diese in Segmente geteilten Bipolarplatten oder Elektrodenplatten können sowohl als plane Platten als auch als gefaltete Bipolarplatten oder Elektrodenplatten gestapelt werden.

Die Anode 17 und die Kathode 18 bestehen aus Metallstreifen 5 bis 9, die beim Herstellungsvorgang ausgestanzt, aus einer Ebene verschoben und mit Kunststoff umspritzt oder aus Einzelteilen gefügt oder zusammengesetzt sind.

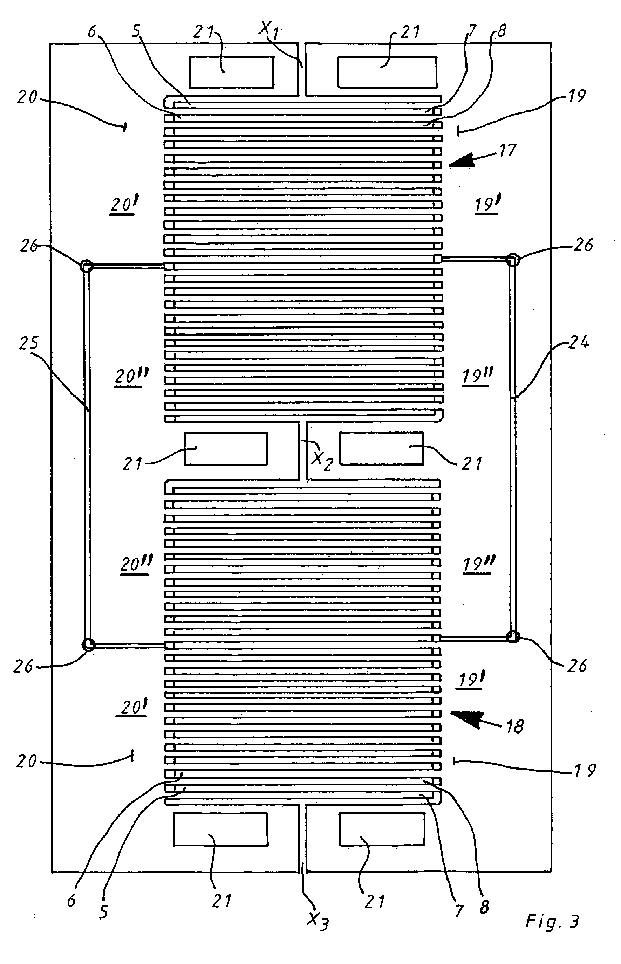

Fig. 3 zeigt eine 2-Volt-Zelle. Durch eine Stanzlinie 24, die während des Stanzvorganges erzeugt wird, und eine entsprechende Stanzlinie 25 werden die Bereiche 19, 20 in die Bereiche 19', 19", 20', 20" geteilt. Gleiches gilt für die Bereiche 19, 20 der Kathode 18. Hierdurch entstehen vier Zellen, wodurch die Spannung vervierfacht wird. Die Trennlinien 24, 25 werden an Punkten 26 mit Kunststoff fixiert, um zu verhindern, dass die Bereiche 19' 19"; 20', 20" beispielsweise durch ein Flattern miteinander in Berührung gelangen.

In Fig. 3 sind auch Zufluss- und Abflusskanäle 21 dargestellt.

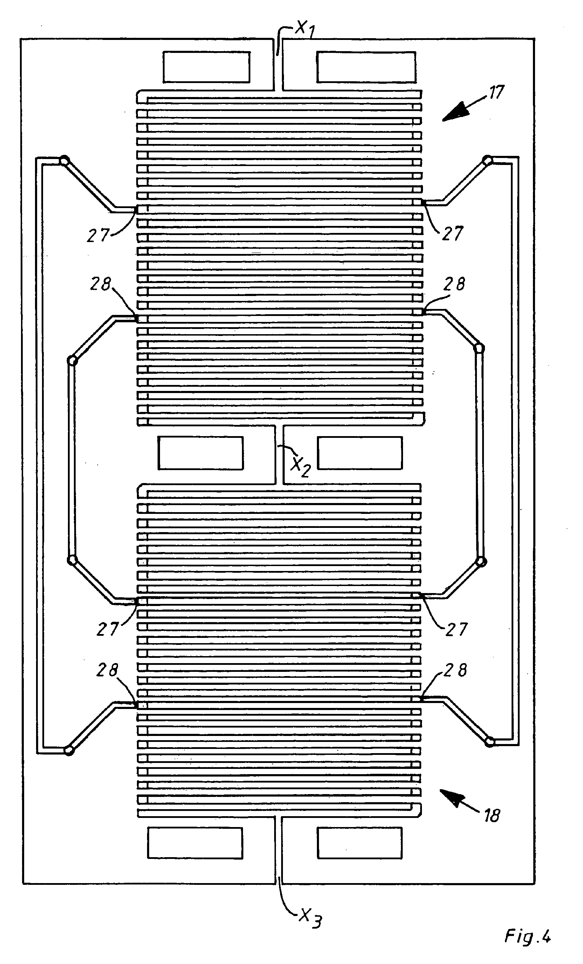

Fig. 4 zeigt eine 3-Volt-Zelle. Die in Segmente geteilte Anode 17 wie auch die in Segmente geteilte Kathode 18 sind durch zwei Trennstellen 27, 28 in drei Bereiche aufgeteilt, so dass sich die Spannung versechsfacht.

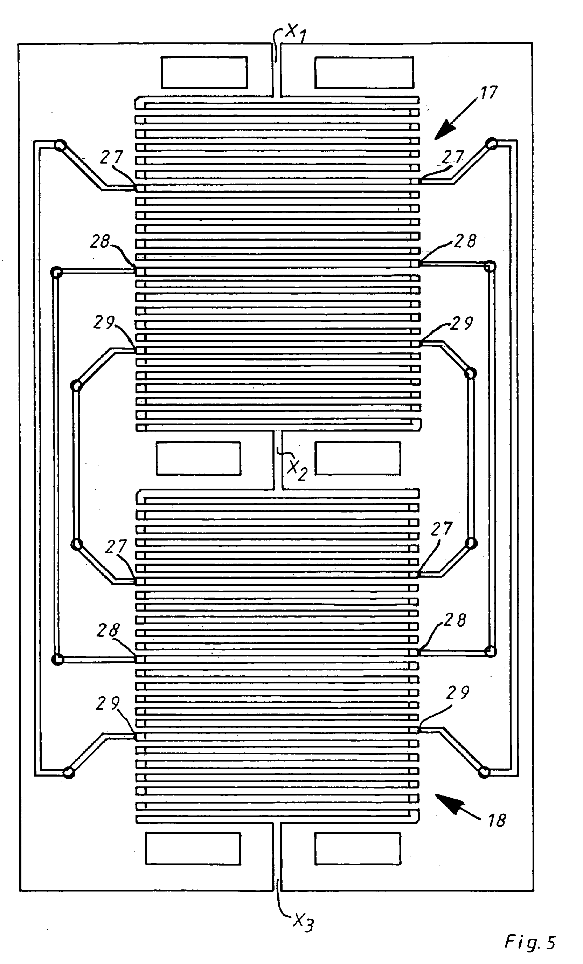

Gemäß Fig. 5 sind die in Segmente geteilte Anode 17 und die in Segmente geteilte Kathode 18 durch drei Trennstellen 27, 28, 29 in vier Zellen aufgeteilt, so dass mit dieser Bipolarplatte eine achtfache Spannung (vier Volt) erzielbar ist.

Die Fig. 6 zeigt die Verschaltung der 2-Volt-Zelle gemäß Fig. 3. Durch die Pfeile wird pro Zelle die überkreuzende Verschaltung 30 der in jeweils zwei Teile geteilten Anoden und Kathoden der geraden Bipolarplatten oder Elektrodenplatten sichtbar.

Fig. 7 zeigt die Verschaltung der 3-Volt-Zelle gemäß Fig. 4. Durch die Pfeile wird pro Zelle die überkreuzende Verschaltung 30 der in jeweils drei Teile geteilten Anoden und Kathoden der geraden Bipolarplatten oder Elektrodenplatten sichtbar.

### Bezugszahlen

- 1 bis 4: Elektrodenplatten / Bipolarplatten
- 5 bis 9: Metallstreifen
- 10: Kunststoff oder Kunststoffteil
- 11 bis 13: Kanäle
- 14: Membran
- 15, 16: Gasdiffusionsschichten
- 17: Anode
- 18: Kathode
- 19, 19', 19": Metallstreifen
- 20, 20', 20": Metallstreifen
- 21: Zufluss- und Abschlusskanäle
- 22: Leiterbahn
- 23: Leiterbahn
- 24: Stanzlinie
- 25: Stanzlinie
- 26: Punkte
- 27: Trennstelle
- 28: Trennstelle
- 29: Trennstelle
- 30: überkreuzende Verschaltung
- X1: Trennstelle
- X2: Trennstelle
- X3: Trennstelle

## Patentansprüche

1. Bipolarplatte oder Elektrodenplatte für Brennstoffzellen oder Elektrolyseur-Stapel, die aus einem leitenden Material gebildet ist, und bei der das leitende Material wenigstens teilweise mit einem nicht leitenden Material umspritzt ausgebildet ist, oder die aus Einzelteilen aus leitendem und nicht leitendem Material zusammengesetzt ist, wobei durch das nicht leitende Material Kanäle für Reaktionsmittel ausgebildet sind,
**dadurch gekennzeichnet, dass** eine in Segmente geteilte Anode (17) und eine in Segmente geteilte Kathode (18) der Bipolarplatte oder Elektrodenplatte jeweils wenigstens eine Trennstelle (X1, X2, X3, 24, 25, 27, 28, 29) in einer Leiterstruktur aufweist.

2. Bipolarplatte oder Elektrodenplatte nach Anspruch 1, **dadurch gekennzeichnet, dass** die Bipolarplatte oder Elektrodenplatte ein Stanzband und/oder wenigstens eine Platine mit Streifen aus gestanztem flächigen Material eines leitfähigen und korrosionsbeständigen Metalles aufweist, und bei der das wenigstens eine Stanzband oder die wenigstens eine Platine wenigstens teilweise mit einem nicht leitfähigen Material umspritzt ausgebildet ist, und dass die Streifen in zwei Ebenen zueinander angeordnet sind.

3. Bipolarplatte oder Elektrodenplatte nach Anspruch 1 oder 2, **dadurch gekennzeichnet, dass** das nicht leitende Material Kunststoff ist.

4. Bipolarplatte oder Elektrodenplatte nach Anspruch 1, **dadurch gekennzeichnet, dass** die Trennstellen (X1, X2, X3) die Leiterstrukturen in zwei Ebenen aufteilt, die durch Metallstreifen (5, 6) und Metallstreifen (7, 8) gebildet sind.

5. Bipolarplatte oder Elektrodenplatte nach Anspruch 1 oder 2, **dadurch gekennzeichnet, dass** wenigstens ein erster Metallstreifen (5, 6) der in Segmente geteilten Anode (17) und wenigstens ein erster Metallstreifen (5, 6) der in Segmente geteilten Kathode (18) elektrisch miteinander verbunden sind, und dass wenigstens ein weiterer Metallstreifen (7, 8) der in Segmente geteilten Anode (17) und wenigstens ein weiterer Metallstreifen (7, 8) der in Segmente geteilten Kathode (18) ebenfalls elektrisch miteinander verbunden sind, und dass die ersten und die weiteren Metallstreifen (5, 6; 7, 8) voneinander elektrisch isoliert ausgebildet sind.

6. Bipolarplatte oder Elektrodenplatte nach einem der vorhergehenden Ansprüche, **dadurch gekennzeichnet, dass** die Ebenen der Metallstreifen (5, 6) der Anode (17) und der Metallstreifen (5, 6) der Kathode (18) überkreuzend verschaltet sind, und dass die Ebenen der Metallstreifen (7, 8) der Anode (17) und der Metallstreifen (7, 8) der Kathode (18) überkreuzend verschaltet sind.

7. Bipolarplatte oder Elektrodenplatte nach einem der vorhergehenden Ansprüche, **dadurch gekennzeichnet, dass** die Metallstreifen (5, 6) einer Ebene der in Segmente geteilten Anode (17) und der Kathode (18) und die Metallstreifen (7, 8) einer Ebene der in Segmente geteilten Anode (17) und Kathode (18) jeweils an einem gemeinsamen Metallstreifen (19, 20) angeordnet sind, und dass die wenigstens eine Trennstelle (24, 25, 27, 28, 29) den gemeinsamen Metallstreifen (19, 20) elektrisch in mehrere Bereiche (19', 19", 20', 20") trennt.

8. Bipolarplatte oder Elektrodenplatte nach einem der vorhergehenden Ansprüche, **dadurch gekennzeichnet, dass** die Bipolarplatte (1, 2, 3) als gefaltete Platte ausgebildet ist.

9. Bipolarplatte oder Elektrodenplatte nach einem der vorhergehenden Ansprüche, **dadurch gekennzeichnet, dass** die Bipolarplatte (1, 2, 3) als plane Platte ausgebildet ist.

10. Bipolarplatte oder Elektrodenplatte nach einem der vorhergehenden Ansprüche, **dadurch gekennzeichnet, dass** eine Gasdiffusionsschicht (15, 16) in Segmente geteilt ausgebildet ist.

11. Bipolarplatte oder Elektrodenplatte nach einem der vorhergehenden Ansprüche, **dadurch gekennzeichnet, dass** eine Membran als ungeteilte Membran (14) ausgebildet ist.

12. Bipolarplatte oder Elektrodenplatte nach einem der vorhergehenden Ansprüche, **dadurch gekennzeichnet, dass** Anschlüsse, Verbindungen und Querschnitte für den Einsatz als Elektrolyseur ausgelegt sind.

13. Verfahren zur Herstellung von in Segmente geteilte Bipolarplatten oder Elektrodenplatten für Brennstoffzellenstapel oder Elektrolyseur-Stapel mit folgenden Verfahrensschritten:
- die in Segmente geteilte Bipolarplatte oder Elektrodenplatte weist wenigstens ein Stanzband und/oder wenigstens eine Platine auf, die aus einem flächigen Material eines leitfähigen und korrosionsbeständigen Metalles gestanzt wird,
- das flächige Material wird streifenförmig im Stanzverfahren eingeschnitten, wobei wenigstens eine Trennstelle (X1, X2, X3, 24, 25, 27, 28, 29) ausgebildet wird,
- die Streifen werden aus einer Mittellage herausgeschoben,
- es wird ein Spritzvorgang durchgeführt, derart, dass die Streifen durch Kunststoff gehalten werden.

14. Verfahren nach Anspruch 13, **dadurch gekennzeichnet, dass** das wenigstens eine Stanzband und/oder die wenigstens eine Platine mit Kunststoff umspritzt oder aus Einzelteilen gefügt werden, derart, dass mit dem Kunststoff Kanäle für die Durchführung von Reaktionsmitteln ausgebildet werden.

15. Verfahren nach einem der Ansprüche 13 oder 16, **dadurch gekennzeichnet, dass** die Streifen während des Stanzvorganges lediglich teilweise eingeschnitten und/oder Verbindungsstege ausgebildet werden.

16. Verfahren nach einem der Ansprüche 13 bis 15, **dadurch gekennzeichnet, dass** in einem Arbeitsbereich der gestanzten Platinen oder Stanzbänder Kanäle zur Führung der Reaktionsmittel vor- oder fertiggeformt werden.
